# EUROPÄISCHE PATENTSCHRIFT

(11) **EP 3 596 709 B1**
(45) Veröffentlichungstag und Bekanntmachung des Hinweises auf die Patenterteilung: **22.07.2026**
(21) Anmeldenummer: 18710855.0
(22) Anmeldetag: 12.03.2018
(51) Int. Cl.: G07C 9/00, G06F 21/35

(54) **VERFAHREN ZUR ZUGANGSKONTROLLE**
ACCESS CONTROL METHOD
PROCÉDÉ DE COMMANDE D'ACCÈS

(30) Priorität: 17.03.2017 DE 102017105771
(43) Veröffentlichungstag der Anmeldung: 22.01.2020
(73) Patentinhaber: Deutsche Telekom AG, 53113 Bonn (DE)
(72) Erfinder: JAKUBEK, Sascha, 50858 Köln (DE); PHILIPEIT, Rudolf, Ansbach 91522 (DE); WEICK, Günter, 53343 Wachtberg (DE)
(74) Vertreter: karo IP
(86) Internationale Anmeldenummer: PCT/EP2018/056012
(87) Internationale Veröffentlichungsnummer: WO 2018/166942

(56) Entgegenhaltungen:
- WO-A1-2009/152628
- WO-A1-2014/063990
- DE-A1- 102012 219 618
- US-A1- 2003 172 272
- US-A1- 2013 086 389
- US-A1- 2014 165 171

## Beschreibung

Die Erfindung betrifft ein Verfahren zur Kontrolle des Zugangs zu einer Einrichtung, zu der der Zugang durch ein Schloss versperrt ist. Das Zugangssystem kann lediglich von einer Person mit einem autorisierten Schlüssel geöffnet werden. Die Erfindung betrifft auch das System zur Umsetzung einer solchen Zugangskontrolle.

Derartige Verfahren schützen nicht nur Zugänge zu physikalischen "realen" Einrichtungen, wie beispielsweise zu Gebäuden und Anlagen; sie sichern auch digitale "virtuelle", von Computersystemen gebildete Einrichtungen. Insofern sind die Merkmale "Schloss" und "Schlüssel" nicht nur mechanisch zu verstehen sondern beziehen sich auch auf elektronische Zugänge zu Computersystemen. Gerade in der digitalen Welt ist das Thema "Sicherheit" in letzter Zeit zu einem zentralen Thema geworden, nachdem immer wieder erfolgreiche Hackerangriffe auf verschiedene sensible Systeme bekannt werden. Entsprechende unerlaubte Zutrittsversuche gibt es auch in der realen Welt, auch wenn solche in den wenigsten Fällen bekannt werden.

Um Zugang zu geschützten Einrichtungen wie realen Bereichen, insbesondere zu Räumen, zu Gebäuden und zu Geländen, oder zu geschützten virtuellen Bereichen, wie zu webbasierten Diensten, zu Dienstleistungen, zu Formularen und zu Auskünften, zu erlangen, müssen aufwendige Verfahrensschritte durchlaufen werden: So muss zunächst definiert werden, welche Personen wann, wo und warum Zugang erlangen dürfen ("Zugangsanliegen"). In einem zweiten Schritt wird dann die Identität der Personen im Zusammenhang mit dem jeweiligen Zugangsanliegen überprüft, bevor der einzelnen Person dann in einem weiteren Schritt ein Zugangsinstrument in Form eines Schlüssels, einer Karte, eines Tokens oder eines Access-Verfahrens ausgehändigt wird. Die ausgegebenen Zugangsinstrumente müssen dann auf ihre Verwendung überwacht werden. Bei Verlust müssen die Zugangsinstrumente ersetzt und mitunter Schlösser ausgetauscht oder gesperrt sowie neue Passwörter ausgegeben werden. Zudem müssen ausgegebene Zugangsinstrumente verwaltet und zuletzt zurück genommen werden.

Aus der US 2003/0 172 272 A1 ist beispielsweise ein Verfahren zur Kontrolle des Zugangs eines Nutzers zu elektronischen Diensten auf Servern offenbart, das im Prinzip ein zwei Wege Autorisierungssystem mit einem Code und einem Zusatzcode darstellt, wie es von mobileTAN und SMS-Tan-Verfahren bekannt ist.

Problematisch ist vor allem, dass es bislang nicht möglich ist, die Identität der Personen im Kontext der Zugangsanliegen durchgängig digital zu überprüfen. So muss zur Vermittlung zwischen den einzelnen Verfahrensschritten und/oder den unterstützenden Mitteln immer wieder Personal eingesetzt werden. Teilweise werden komplexe, unkomfortable und unsichere Verfahren eingesetzt, um die bestehenden Medienbrüche zu kompensieren.

Dabei ist aus der EP 2 544 155 A1 ein Verfahren bekannt, bei dem sich ein Nutzer mittels eines Ausweises und eines Identifizierungscodes bei einem zentzralen Server für den Zugriff auf elektronische Dienste oder für den Zugang zu einem Gebäude authentifiziert.

DE 10 2012 219 618 A1 beschreibt ein Verfahren zur sicheren Erzeugung eines Soft-Tokens durch Verwendung eines Secure Elements und asymmetrischer Kryptographie. Dabei werden One Time Passwords (OTPs) über kryptografisch gesicherte Verbindungen ausgetauscht und überprüft, bevor das Soft-Token signiert und an das elektronische Gerät oder Nutzer-Computersystem übertragen wird.

Die Aufgabe der vorliegenden Erfindung liegt darin, ein mit einfachen Mitteln kostengünstig umzusetzendes und komfortabel zu bedienendes Zugangsverfahren zu schaffen, das eine erhöhte Sicherheit vor unerlaubten Zugängen zu realen und "virtuellen" Umgebungen bietet. Zudem ist es die Aufgabe, ein entsprechendes System zur Zugangskontrolle zu schaffen.

Diese Aufgaben werden durch das Verfahren mit den Merkmalen des Anspruchs 1 und das System mit den Merkmalen des Anspruchs 6 gelöst. Vorteilhafte Ausführungsformen sind in den jeweiligen Unteransprüchen genannt.

Der wesentliche Grundgedanke der Erfindung liegt zunächst darin, dass bereits zertifizierte Mittel, mithin Mittel, deren "Echtheit" anerkannt ist, weitere Mittel zertifizieren. Dabei besitzt ein Mittel dann "Echtheit", wenn es nicht kopiert werden kann. So entstehen in sich geschlossene Sicherheitsringe, wobei gemäß der Erfindung mehrere solcher Sicherheitsringe quasi miteinander verkettet werden. Dabei beginnt das Verfahren mit einem zertifizierten Identitätsdokument einer Person, mit dem sich diese an einem entsprechend dafür vorgesehenen Zugangspunkt ausweist. Insofern lässt sich die Erfindung auch als "SID Access" ("Secure Identity Access") mit "High Security Chain" bezeichnen.

Anspruchsgemäß wird das entsprechende Verfahren zur Kontrolle des Zugangs zu einem System in drei Prozessschritten umgesetzt:
In einem ersten Schritt wird ein Identifikationsprozess durchlaufen, bei dem sich die Person, die Zugang zu dem System wünscht, mit einem ihr zugeordneten zertifizierten Identitätsausweises ausweist. Als Identitätsausweises können insbesondere von staatlicher Stelle zertifizierte Personaldokumente, wie beispielsweise der elektronisch lesbare Personalausweis ("eID") eingesetzt werden. Dem Identitätsausweis ist ein geheimer Code zugeordnet, der lediglich der Person bekannt ist. Mit einem solchen Identitätsausweises benutzt die Person einentsprechendes Lesegerät , indem das Lesegerät beispielsweise die auf dem Identitätsausweis gespeicherten personenbezogenen Daten ausliest. Außerdem gibt die Person den geheimen Code, beispielsweise in Form einer PIN, vor.

Die personenbezogenen Daten bilden zusammen mit dem geheimen Code eine erste "Echtheit", die jedoch zunächst von entsprechender Stelle überprüft werden muss. Dazu werden die personenbezogenen Daten über eine Datenleitung an einen Identitätsserver, der von hoheitlicher Stelle kontrolliert sein kann, gesendet. Der Identitätsserver gewährleistet, dass die personenbezogenen Daten und der eingegebene Code zusammen gehören und zur Laufzeit nicht gesperrt sind. Wenn dem so ist, wird vom Identitätsserver eine Echtheitsinformation generiert und über eine Datenleitung an einen Zugangsserver des Systems, zu dem Zugang gewünscht wird, gesendet. Die Echtheitsinformation zertifiziert den Zugangsserver; macht diesen quasi "echt". Auf diesem Wege kann sich ein Unternehmen, das einen Zugangsserver betreibt, eine hoheitlich zertifizierte Echtheit zur Weiterverarbeitung ins Haus holen.

Dabei ist es vorgesehen, dass das Lesegerät, der Identitätsserver und der Zugangsserver während des laufenden Identifikationsprozesses miteinander im Datenaustausch bezüglich dieses Identifikationsprozesses stehen und damit einen ersten Sicherheitsring bilden. Der Zugangsserver kann damit einerseits vom Lesegerät die personenbezogenen Daten und andererseits vom Identitätsserver die Echtheitsinformation erhalten, die ihm bestätigt, dass die Person mit der übereinstimmt, für die der Identitätsausweis ausgestellt ist.

In einem weiteren Schritt wird nun ein Autorisierungsprozess durchlaufen, bei dem die Person, die Zugang zu der Einrichtung wünscht, mit einem autorisierten Schlüssel ausgestattet wird. Dazu generiert der nunmehr zertifizierte Zugangsserver auf der Grundlage der vorliegenden Echtheitsinformation einen solchen autorisierten Schlüssel und sendet diesen an ein der Person zugängliches Endgerät, insbesondere an ein der Person zugeordnetes mobiles Endgerät, wie beispielsweise das eigene Smartphone. Mit dem Erhalt dieses Schlüssels ist nunmehr auch das mobile Endgerät zertifiziert; besitzt mithin eine eigene "Echtheit".

Wie schon ausgeführt, sind die Merkmale "Schloss" und "Schlüssel" nicht nur mechanisch zu verstehen, sondern beziehen sich auch auf elektronische Zugänge zu Computersystemen. Entsprechend umfasst das Merkmal "Einrichtung" sowohl reale als auch virtuelle Systeme.

Dabei ist es die Besonderheit der erfindungsgemäßen Vorgehensweise, dass das mobile Endgerät wie das eigene Smartphone ein solches sein kann, das nicht dem System zugehörig ist. Damit der Schlüssel auf das mobile Endgerät gesendet werden kann, muss dem System - also dem Zugangsserver - dessen elektronische Adresse, beispielsweise die Telefonnummer oder Emailadresse, bekannt sein. Dabei bietet es sich an, dass auf dem Smartphone eine spezielle Applikation ("App") installiert ist, die zu einer solchen Kommunikation mit dem System ausgelegt ist.

Wie schon beim Identifikationsprozess ist es auch im Rahmen des Autorisierungsprozesses vorgesehen, dass das Triplett aus Lesegerät, Zugangsserver und mobilen Endgerät im laufenden Autorisierungsprozess miteinander im Datenaustausch stehen und damit einen zweiten Sicherheitsring bilden.

Der letzte Schritt des erfindungsgemäßen Verfahrens kann als Anwendungsprozess beschrieben werden. In diesem Schritt öffnet die Person das mechanische oder "virtuelle" Schloss, also den Zugang zu dem System, mit dem auf dem mobilen Endgerät befindlichen autorisierten Schlüssel. Auch in diesem Fall ist es vorteilhaft, wenn der Zugangsserver, das mobile Endgerät und das Schloss in dem laufenden Anwendungsprozess miteinander im Datenaustausch stehen und einen dritten Sicherheitsring bilden.

Vorteilhafterweise ist zusätzlich zu den ersten drei Schritten ein weiterer Schritt in Form eines Verifikationsprozesses vorgesehen. Dabei wird das Öffnen des Schlosses in Verbindung mit der Identität des autorisierten Schlüssels von einem Protokollierungsserver protokolliert, um alle Zugänge zu jedem beliebigen Zeitpunkt nachvollziehen zu können. Der Zugangsserver, das Schloss und der Protokollierungsserver können in einem laufenden Verifikationsprozess wiederum miteinander im Datenaustausch stehen und einen vierten Sicherheitsring bilden. Im Übrigen wird vorteilhafterweise auch registriert und/oder protokolliert, wenn die Person das System verlässt. Somit kann jederzeit überwacht werden, wer sich im System befindet respektive befunden hat. Mit dem Verifikationsprozess sind alle Vorgänge juristisch nachverfolgbar.

Mit der erfindungsgemäßen "High Security Chain" werden auf elektronischem Wege die bisher in der analogen Welt notwendigen umständlich handhabbaren Prozessschritte für den Zugang zu solchen Systemen beseitigt und von der kontextbezogenen Identifizierung in die digitale Welt verlagert (Stichwort "IoT" und "IIoT"). Dabei wird mit der Selbstadministration eine neue Dimension für Zugangssysteme geschaffen. Durch einen eindeutigen und dauerhaft beweiskräftigen Nachweis der Identität einer Person aus der realen Welt, beispielsweise aus einem Melderegister, können spontan Zugänge gewährt werden, die bisher nur nach einem sehr umständlichen Verfahren mit Sichtprüfung eines Ausweisdokumentes und der zugehörigen Person gewährt werden konnten.

Der Vorteil der erfindungsgemäßen Vorgehensweise liegt zum einen in einer besonders hohen Sicherheitsstufe, die durch den Einsatz einer mindestens dreifachen, vorteilhafterweise sogar vierfachen Sicherheitsverkettung der einzelnen Schritte respektive Sicherheitsringe "Identification/Authentification"; "Authorization", "Application" und gegebenenfalls "Verification/Justification". Dabei kann durch die Nutzung verfügbarer, hoheitlicher Identity Cards und zugehöriger Leseeinrichtung (Secure Identity Access - SID-Access) sowie der zugrundeliegenden hoheitlichen Infrastruktur höchstmögliche Sicherheit gewährleistet werden. Zu der hoheitlichen Infrastruktur gehören der hoheitliche eID-Server, der vorteilhafterweise den Identitätsserver bildet. Zudem können nicht kopierbare Identity Cards, insbesondere der elektronische Personalausweis, und die vorhandene Verschlüsselung der Datenübertragung genutzt werden. Mit der hoheitlichen Infrastruktur stehen für alle Beteiligten entsprechend hoheitliche Zertifikate zur Verfügung. Es kann auf landesweite Sperrlisten zurück gegriffen werden, so dass sofortige Sperrungen bei Verlusten möglich sind.

Die Erfindung ist nicht auf hoheitliche ID-Karten mit elektronischen Zertifikat beschränkt. Beispielsweise können auch private Dienstleister in Ländern, wo solche IDs nicht existieren, die hoheitlichen Aufgaben übernehmen und solche Identitätsausweise ausgeben.

Ein weiterer Vorteil liegt darin, dass neue "Intrasec"- und "Intersec"- Plattformen entwickelt werden können. So kann bei großen Firmen der Zugangsserver ("Access-Server") inhouse als Intrasec-Plattform betrieben werden, während kleine Firmen auf eine von einem Provider betriebene Intersec-Plattform zurückgreifen können. Ein weiterer Vorteil liegt darin, dass die Erfindung mobil (Zugang mittels Smartphone) und stationär (Zugang mittels zugänglichem Terminal) umgesetzt werden kann. Zudem ist eine hohe Modularität bei der Vergabe von Berechtigungen und von Rollen und eine hohe räumliche und zeitliche Variabilität gewährleistet. Insbesondere können autorisierte Schlüssel nach einem beliebig vorgegebenen Zeitraum gesperrt werden ("timeout"). Das System ist darüber hinaus von hoher Vielfältigkeit: Es kann in beliebige Anwendungen umgesetzt werden und dabei die komplette heutige und zukünftige digitale Welt mit einbeziehen.

Ein ganz wesentlicher Vorteil liegt in der hohen Skalierbarkeit des Systems. Schließlich besitzt jeder Bürger eine Identity Card, wobei zukünftig alle Identity Cards mit eID ausgestattet werden können. So wird damit gerechnet, dass im Jahre 2020 allein in Deutschland 70 Millionen neue Personalausweise mit eID im Umlauf sind. Dabei macht das System nicht an Ländergrenzen halt, sondern kann in verbundenen Staaten, insbesondere in der Europäischen Union, eingesetzt werden.

Letztendlich lassen sich wegen der vollelektronischen Prozessgestaltung mit der Erfindung erhebliche Einsparungen in zeitlichen Abläufen und im maschinellen Aufwand realisieren.

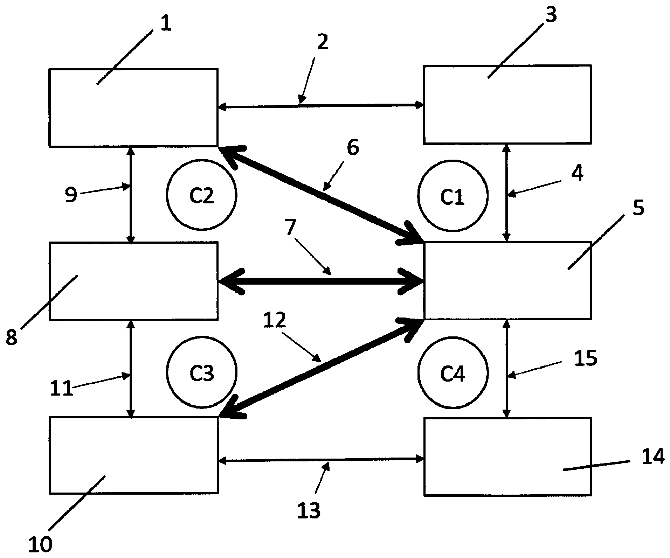

### Nachfolgend wird die Erfindung anhand der Figur näher erläutert:

Im Folgenden wird die Erfindung am Beispiel eines physischen Verfahrens des Zutrittsmanagements einer Einrichtung dargestellt. Die Figur zeigt schematisch die einzelnen Entitäten der Einrichtung respektive Mittel zur Umsetzung des Verfahrens in ihrer Zusammenwirkung. Die Erfindung bildet ein geschlossenes Gesamtsystem mit mehreren Einzelkomponenten, die zur Erhöhung der Gesamtsicherheit über VPN-Tunnel verbunden sind.

Die Einzelkomponenten sind zunächst der persönliche Identitätsausweis einer Person dem ein geheimer Code, beispielsweise in Form einer sechsstelligen PIN, eindeutig zugeordnet ist. Der Identitätsausweis kann über ein elektronisches Lesegerät 1 eingelesen werden, das der Person in diesem Fall auch die Möglichkeit bietet, die PIN einzugeben. Der Identitätsausweis ist eine nicht kopierbare hoheitliche elektronische Identity Card, wie beispielsweise der deutsche Personalausweis, der mit der zugehörigen Endeinrichtung in Form einer Leseeinrichtung 1 in einer geschlossenen, nicht manipulierbaren Weise verwendet wird. Dabei bedeutet "nicht manipulierbar", dass das Betriebssystem der Leseeinrichtung 1 aus einem schreibgeschützten Speicher geladen wird. Nach jedem neuen Bootvorgang wird damit ein "echter" Originalzustand ohne jegliche Schadsoftware hergestellt. Leseeinrichtung 1 Endeinrichtung ist dabei so ausgestaltet, dass diese von außen über das Netzwerk nicht erreichbar ist. Sämtliche Verbindungen gehen nur von dieser Leseeinrichtung 1 nach außen.

Über die abgesicherte Datenleitung 2 werden die ausgelesenen personenbezogenen Daten an einen Identitätsserver 3 (eID-Server) übertragen, der auf der Grundlage des eingegebenen Codes die der Identität der Person anhand der personenbezogenen Daten überprüft und gegebenenfalls bestätigt. Der Identitätsserver 3 besitzt ein nicht kopierbares Hardware-Secure-Module (HSM) und ist damit eine weitere "echte" Komponente des Gesamtsystems. Er hat eine logische Verbindung zum hoheitlich verwalteten Melderegister eines Landes.

Bei erfolgreicher Prüfung sendet der Identitätsserver 3 eine Echtheitsinformation über die Datenleitung 4 an einen dem System zugeordneten Zugangsserver 5. Der Zugangsserver 5 ist seinerseits über den VPN-Tunnel 6 mit dem Lesegerät 1 verbunden.

Im Autorisierungsprozess generiert der zertifizierte Zugangsserver 5 mit der Echtheitsinformation einen autorisierten elektronischen Schlüssel, beispielsweise ein Token, und sendet diesen über den VPN-Tunnel 7 an das private Smartphone 8 der Person, die Zugang zu dem System sucht. Das Smartphone 8 kann über die Verbindung 9 elektronisch oder optisch mit der Leseeinrichtung 1 in Kontakt treten. Das Smartphone 8 ist nicht Bestandteil des geschlossenen Gesamtsystems, so dass jedes unsichere Endgerät als Trägermedium für den Schlüssel verwendet werden kann. Im Anwendungsprozess öffnet die Person das Schloss 10 mit dem auf dem Smartphone 8 befindlichen autorisierten Schlüssel. Dazu sind das Smartphone 8 und das Schloss 10 über die Leitung 11 datenleitend verbunden. In diesem Fall kann die Leitung 11 auch eine optische Strecke sein. Das Schloss 10 wird somit von dem Smartphone 8 und dem Zugangsserver 5 gesteuert, der über die Datenleitung 12 den gewünschten Zugang freischaltet.

Gleichzeitig übermittelt das Schloss 10 über die Datenleitung 13 Protokollinformationen an einen Protokollierungsserver 14, der wiederum über die Datenleitung 15 mit dem Zugangsserver 5 verbunden ist. Der Protokollierungsserver dient als Protokollinstanz für eine eventuelle spätere Beweisführungen. Aus den gespeicherten Daten ist ersichtlich, wer welcher Person wann und warum welche Zugangsberechtigung erteilt hat und wie diese Person die Zugangsberechtigung genutzt hat.

Die Einzelkomponenten interagieren in vier Sicherheitsringen (C1 bis C4), die jeweils immer einen gemeinsamen Pfad mit dem Nachbarkreislauf haben. So entsteht eine Kette aus vier hochsicheren Gliedern (High Security Chain - HSC). Der erste Sicherheitsring C1 symbolisiert die Identifikation, der zweite Sicherheitsring C2 symbolisiert die Autorisierung, der dritte Sicherheitsring C3 symbolisiert die Anwendung und der vierte Sicherheitsring C4 symbolisiert die Verifikation. Das Zusammenspiel der verteilten Einzelkomponenten in der Gesamtarchitektur SID-Access wird anhand der Figur verdeutlicht:
Jeder Sicherheitsring besteht aus mindestens drei Komponenten und steht für eine Echtheit beim Durchlauf. Die Echtheit eines Durchlaufes wird dadurch erreicht, dass jeweils aus zwei Echtheiten eine dritte generiert wird. Diese dritte Echtheit stellt zusammen mit einer der ersten beiden Echtheiten das Echtheitsduo für den nächsten Sicherheitsring dar. Die erfindungsgemäße "High Security Chain" ist in der dargestellten Sicherheitsverkettung in der Lage, eine Echtheit über Systemwelten hinweg, hier von dem hoheitlichen System zu einer privaten Anwendung, zu transportieren. Eine Protokollinstanz am Ende der Sicherheitskette registriert die Vorgänge. Ähnlich wie bei einer "Blockchain" werden die einzelnen Vorgänge nachweisbar verschmolzen. Damit wird die Kette mit ihrem Ausgangspunkt wieder zusammengeführt.

Im Sicherheitsring C1 der Identifikation ist die Echtheit durch die Verbindung eines gekapselten Systems bestehend aus dem Lesegerät 1 und dem Identitätsserver 3 gewährleistet. Diese Verbindung wird durch die beiden Verbindungen 4 und 6 zum Sicherheitsring C1 geschlossen.

Die bestehende Verbindung des Lesegerätes 1 mit dem Zugangsserver 5 ist zur Laufzeit der Browsersession echt, mithin vertrauenswürdig. Bei dieser Verbindung sind das Lesegerätes 1 und der Zugangsserver 5 echt und können somit den Schlüssel 8 in ihren Kreis mit aufnehmen. Damit ist der Sicherheitsring C2 der Autorisierung geschlossen. Das Speichern von zusammengehörigen, sicher verschlüsselten Geheimnissen bei Schlüssel 8 und Zugangsserver 5 stellen dauerhaft zwei weitere echte Komponenten für den nächsten Sicherheitsring C3, die Anwendung, her.

Die abgestimmten Geheimnisse vom Schlüssel 8 und dem Zugangsserver 5 ermöglichen zu einem späteren Zeitpunkt den Sicherheitsring C3 zu aktivieren. In diesem Sicherheitsring C3 befinden sich nun der Schlüssel 8 und das Schloss 10, womit der SID-Zugang ermöglicht wird. Der Zugang selbst ist dabei die neu gestaltete Echtheit im Sicherheitsring C3.

Zur Absicherung der erfindungsgemäßen "High Security Chain" wird ein vierter Sicherheitsring C4 zum Einsatz gebracht. Die Echtheit "Schloss wird geöffnet" wird vom Zugangsserver 5 vorbereitet und vom Schloss 10 an den Protokollierungsserver 14 signalisiert. Nachdem der Protokolleintrag im Protokollierungsserver 14 verglichen und im Anschluss hinterlegt wurde, erhält der Zugangsserver 5 das entsprechende Signal um das Schloss endgültig zu öffnen.

## Patentansprüche

1. Verfahren zur Kontrolle des Zugangs zu einer Einrichtung, wobei der Zugang durch ein Schloss (10) versperrt ist, das von einer Person mit einem autorisierten Schlüssel geöffnet wird, mit folgenden Schritten:
in einem Identifikationsprozess
- weist sich die Person mit einem zertifizierten Identitätsausweises an einem elektronischen Lesegerät (1) aus und gibt einen dem Identitätsausweis zugeordneten geheimen Code ein, wobei der Identitätsausweis über ein elektronisches Lesegerät (1) eingelesen wird, wobei der Identitätsausweis eine nicht kopierbare hoheitliche elektronische Identity Card ist, die mit einer Leseeinrichtung in einer geschlossenen, nicht manipulierbaren Weise verwendet wird, indem das Betriebssystem der Leseeinrichtung aus einem schreibgeschützten Speicher geladen wird,
- werden auf dem Identitätsausweis gespeicherte Identitätsdaten an einen Identitätsserver (3) geschickt, der auf der Grundlage des eingegebenen Codes die Identität der Person anhand der Identitätsdaten bestätigt,
- sendet der Identitätsserver (3) nach erfolgter Bestätigung eine Echtheitsinformation an einen der Einrichtung zugeordneten Zugangsserver (5),
wobei das Lesegerät (1), der Identitätsserver (3) und der Zugangsserver (5) während des laufenden Identifikationsprozesses miteinander im Datenaustausch bezüglich dieses Identifikationsprozesses stehen, wodurch ein erster Sicherheitsring gebildet wird, der es ermöglicht, dass der Zugangsserver damit einerseits von dem Lesegerät die personenbezogenen Daten und anderseits vom Identitätsserver die Echtheitsinformationen erhält, die ihm bestätigen, dass die Person mit der Übereinstimmt, für die der Identitätsausweis ausgestellt wurde,
in einem Autorisierungsprozess
- generiert der Zugangsserver (5) mit der vorliegenden Echtheitsinformation einen autorisierten Schlüssel und
- sendet diesen Schlüssel an ein für die Person zugängliches Endgerät (8), wobei das Lesegerät (1), der Zugangsserver (5) und das Endgerät (8) in einem laufenden Autorisierungsprozess miteinander im Datenaustausch bezüglich dieses Autorisierungsprozesses stehen
in einem Anwendungsprozess
- öffnet die Person das Schloss (10) mit dem auf das Endgerät (8) erhaltenen autorisierten Schlüssel.

2. Verfahren nach Anspruch 1,
**dadurch gekennzeichnet,**
**dass** der Zugangsserver (5), das Endgerät (8) und das Schloss (10) in einem laufenden Anwendungsprozess miteinander im Datenaustausch bezüglich dieses Anwendungsprozesses stehen.

3. Verfahren nach Anspruch 1 oder 2,
**dadurch gekennzeichnet,**
**dass** der autorisierte Schlüssel nach einem vorgegebenen Zeitraum ("timeout") gesperrt wird.

4. Verfahren nach einem der vorherigen Ansprüche,
**dadurch gekennzeichnet,**
**dass** in einem Verifikationsprozess das Öffnen des Schlosses (10) in Verbindung mit der Identität des autorisierten Schlüssels von einem Protokollierungsserver (14) protokolliert wird.

5. Verfahren nach Anspruch 4,
**dadurch gekennzeichnet,**
**dass** der Zugangsserver (5), das Schloss (10) und der Protokollierungsserver (14) in einem laufenden Verifikationsprozess miteinander im Datenaustausch bezüglich dieses Verifikationsprozesses stehen.

6. System zur Kontrolle des Zugangs zu einer Einrichtung, deren Zugang durch ein Schloss (10) versperrt ist und von einer Person mit einem autorisierten Schlüssel zu öffnen ist ist aufweisend
- zertifizierte Identitätsausweise, die jeweils einzelnen Personen eindeutig zugeordnet sind,
- ein elektronisches Lesegerät (1) zur Einlese der auf einem Identitätsausweis vorhandenen personenbezogenen Identitätsdaten und zur Eingabe eines dem Identitätsausweis zugeordneten geheimen Codes, wobei der Identitätsausweis über ein elektronisches Lesegerät (1) eingelesen wird, wobei der Identitätsausweis eine nicht kopierbare hoheitliche elektronische Identity Card ist, die mit einer Leseeinrichtung in einer geschlossenen, nicht manipulierbaren Weise verwendet wird, indem die Leseeinrichtung eingerichtet ist das Betriebssystem der Leseeinrichtung aus einem schreibgeschützten Speicher zu laden,
- einen Identitätsserver (3) zur Bestätigung der Identität der Person anhand der Identitätsdaten auf der Grundlage des eingegebenen Codes und zur Generierung von Echtheitsinformation,
- einen der Einrichtung zugeordneten Zugangsserver (5),
- einen vom zertifizierten Zugangsserver (5) mit vorliegender Echtheitsinformation autorisierten Schlüssel,
- ein für die Person zugängliches Endgerät (8),
- ein mit dem auf dem Endgerät erhaltenen autorisierten Schlüssel zu öffnendes Schloss (10),
**gekennzeichnet durch**
- einen von datenleitenden Verbindungen zwischen dem Lesegerät (1), dem Identitätsserver (3) und dem Zugangsserver (5) gebildeten ersten Sicherheitsring, eingerichtet, dass der Zugangsserver einerseits von dem Lesegerät die personenbezogenen Daten und anderseits vom Identitätsserver die Echtheitsinformationen erhält, die ihm bestätigen, dass die Person mit der Übereinstimmt, für die der Identitätsausweis ausgestellt wurde,
- einen von datenleitenden Verbindungen zwischen dem Lesegerät (1), dem Zugangsserver (5) und dem Endgerät (8) gebildeten zweiten Sicherheitsring und
- einen von datenleitenden Verbindungen zwischen dem Zugangsserver (5), dem Endgerät (8) und dem Schloss (10) gebildeten dritten Sicherheitsring,
- wobei zur Zugangskontrolle jeweils zwei benachbarte der Sicherheitsringe miteinander in datenleitender Verbindung stehen.

7. System nach Anspruch 6,
**gekennzeichnet durch**
einen von datenleitenden Verbindungen zwischen dem Zugangsserver (5), dem Schloss (10) und einem Protokollierungsserver (14) gebildeten vierten Sicherheitsring, der bei der Zugangskontrolle mit dem dritten Sicherheitsring in leitender Verbindung steht.

## Claims

1. Method for controlling access to a facility, wherein access is blocked by a lock (10) that is opened by a person with an authorized key, comprising the following steps:
in an identification process
- the person identifies themself using a certified identity document on an electronic reader (1) and enters a secret code assigned to the identity document, wherein the identity document is read in via an electronic reader (1), wherein the identity document is a non-copyable official electronic identity card, which is used with a reader in a closed, non-manipulable manner by the operating system of the reader being loaded from a write-protected memory,
- identity data stored on the identity document are sent to an identity server (3), which, on the basis of the code entered, confirms the identity of the person with the aid of the identity data,
- after confirmation has taken place, the identity server (3) transmits authenticity information to an access server (5) assigned to the facility,
wherein during the ongoing identification process the reader (1), the identity server (3) and the access server (5) exchange data with one another with respect to this identification process, whereby a first security ring is formed, which makes it possible for the access server thus to obtain firstly from the reader the personal data and secondly from the identity server the items of authenticity information, which confirm to the server that the person matches the person for whom the identity document was issued,
in an authorization process
- the access server (5) generates an authorized key using the available authenticity information and
- transmits this key to a terminal (8) accessible to the person, wherein in an ongoing authorization process the reader (1), the access server (5) and the terminal (8) exchange data with one another with respect to this authorization process,
in an application process
- the person opens the lock (10) using the authorized key obtained on the terminal (8).

2. Method according to Claim 1,
**characterized**
**in that** in an ongoing application process the access server (5), the terminal (8) and the lock (10) exchange data with one another with respect to this application process.

3. Method according to Claim 1 or 2,
**characterized**
**in that** the authorized key is blocked after a predefined period of time ("timeout").

4. Method according to any of the preceding claims,
**characterized**
**in that** in a verification process the opening of the lock (10) in conjunction with the identity of the authorized key is logged by a logging server (14).

5. Method according to Claim 4,
**characterized**
**in that** in an ongoing verification process the access server (5), the lock (10) and the logging server (14) exchange data with one another with respect to this verification process.

6. System for controlling access to a facility whose access is blocked by a lock (10) and is to be opened by a person with an authorized key, comprising
- certified identity documents each uniquely assigned to individual persons,
- an electronic reader (1) for reading in the personal identity data present on an identity document and for entering a secret code assigned to the identity document, wherein the identity document is read in via an electronic reader (1), wherein the identity document is a non-copyable official electronic identity card, which is used with a reader in a closed, non-manipulable manner by the reader being configured to load the operating system of the reader from a write-protected memory,
- an identity server (3) for confirming the identity of the person with the aid of the identity data on the basis of the entered code and for generating authenticity information,
- an access server (5) assigned to the facility,
- a key authorized by the certified access server (5) with the available authenticity information,
- a terminal (8) accessible to the person,
- a lock (10) to be opened using the authorized key obtained on the terminal,
**characterized by**
- a first security ring formed by data-conducting connections between the reader (1), the identity server (3) and the access server (5), configured such that the access server obtains firstly from the reader the personal data and secondly from the identity server the items of authenticity information, which confirm to the access server that the person matches the person for whom the identity document was issued,
- a second security ring formed by data-conducting connections between the reader (1), the access server (5) and the terminal (8), and
- a third security ring formed by data-conducting connections between the access server (5), the terminal (8) and the lock (10),
- wherein for access control purposes in each case two adjacent security rings from among the aforementioned security rings are connected to one another in a data-conducting manner.

7. System according to Claim 6,
**characterized by**
a fourth security ring formed by data-conducting connections between the access server (5), the lock (10) and a logging server (14), said fourth security ring being connected to the third security ring in a conducting manner during access control.

## Revendications

1. Procédé de contrôle de l'accès à un équipement, dans lequel l'accès est bloqué par une serrure (10) qui est ouverte par une personne disposant d'une clé autorisée, comprenant les étapes suivantes :
dans un processus d'identification
- la personne s'identifie sur un lecteur électronique (1) avec un justificatif d'identité certifié et saisit un code secret associé au justificatif d'identité, le justificatif d'identité étant lu par l'intermédiaire du lecteur électronique (1), le justificatif d'identité étant une carte d'identité électronique souveraine non copiable qui est utilisée avec un équipement de lecture de manière fermée et non manipulable par le fait que le système d'exploitation de l'équipement de lecture est chargé à partir d'une mémoire protégée en écriture,
- les données d'identité stockées sur le justificatif d'identité sont envoyées à un serveur d'identité (3) qui confirme l'identité de la personne à l'aide des données d'identité sur la base du code saisi,
- après une confirmation réussie, le serveur d'identité (3) envoie une information d'authenticité à un serveur d'accès (5) associé à l'équipement,
le lecteur (1), le serveur d'identité (3) et le serveur d'accès (5) échangent les uns avec les autres des données concernant ce processus d'identification pendant le processus d'identification en cours, formant ainsi un premier anneau de sécurité qui permet de faire en sorte que le serveur d'accès reçoive, d'une part, les données à caractère personnel provenant du lecteur et, d'autre part, l'information d'authenticité provenant du serveur d'identité lui confirmant que la personne correspond à celle pour laquelle le justificatif d'identité a été délivré,
dans un processus d'autorisation
- le serveur d'accès (5) génère une clé autorisée à l'aide de l'information d'authenticité présente, et
- envoie cette clé à un terminal (8) accessible à la personne, le lecteur (1), le serveur d'accès (5) et le terminal (8) échangent les uns avec les autres des données concernant ce processus d'autorisation lors d'un processus d'autorisation en cours,
dans un processus d'utilisation
- la personne ouvre la serrure (10) avec la clé autorisée reçue sur le terminal (8).

2. Procédé selon la revendication 1,
**caractérisé en ce que**
le serveur d'accès (5), le terminal (8) et la serrure (10), dans un processus d'utilisation en cours, échangent les uns avec les autres des données concernant ce processus d'utilisation.

3. Procédé selon la revendication 1 ou 2,
**caractérisé en ce que**
la clé autorisée est bloquée après un laps de temps prédéfini ("timeout").

4. Procédé selon l'une des revendications précédentes, **caractérisé en ce que**,
dans un processus de vérification, l'ouverture de la serrure (10) en liaison avec l'identité de la clé autorisée est consignée par un serveur de journalisation (14).

5. Procédé selon la revendication 4,
**caractérisé en ce que**
le serveur d'accès (5), la serrure (10) et le serveur de journalisation (14), dans un processus de vérification en cours, échangent les uns avec les autres des données concernant ce processus de vérification.

6. Système de contrôle de l'accès à un équipement dont l'accès est bloqué par une serrure (10) et qui doit être ouvert par une personne disposant d'une clé autorisée, comportant
- des justificatifs d'identité certifiés qui sont respectivement associés de manière univoque à des personnes individuelles,
- un lecteur électronique (1) pour lire les données à caractère personnel présentes sur un justificatif d'identité et pour saisir un code secret associé au justificatif d'identité, le justificatif d'identité étant lu par l'intermédiaire d'un lecteur électronique (1), le justificatif d'identité étant une carte d'identité électronique souveraine non copiable qui est utilisée avec un équipement de lecture de manière fermée et non manipulable par le fait que l'équipement de lecture est conçu pour charger le système d'exploitation de l'équipement de lecture à partir d'une mémoire protégée en écriture,
- un serveur d'identité (3) pour confirmer l'identité de la personne à l'aide des données d'identité sur la base du code saisi et pour générer une information d'authenticité,
- un serveur d'accès (5) associé à l'équipement,
- une clé autorisée par le serveur d'accès (5) certifié avec l'information d'authenticité présente,
- un terminal (8) accessible à la personne,
- une serrure (10) à ouvrir avec la clé autorisée reçue sur le terminal,
**caractérisé par**
- un premier anneau de sécurité formé par des liaisons de transmission de données entre le lecteur (1), le serveur d'identité (3) et le serveur d'accès (5), conçu de telle sorte que le serveur d'accès reçoive, d'une part, les données à caractère personnel provenant du lecteur et, d'autre part, l'information d'authenticité provenant du serveur d'identité lui confirmant que la personne correspond à celle pour laquelle le justificatif d'identité a été délivré,
- un deuxième anneau de sécurité formé par des liaisons de transmission de données entre le lecteur (1), le serveur d'accès (5) et le terminal (8), et
- un troisième anneau de sécurité formé par des liaisons de transmission de données entre le serveur d'accès (5), le terminal (8) et la serrure (10),
- dans lequel, pour le contrôle d'accès, deux des anneaux de sécurité adjacents sont respectivement en liaison de transmission de données l'un avec l'autre.

7. Système selon la revendication 6,
**caractérisé par**
un quatrième anneau de sécurité formé par des liaisons de transmission de données entre le serveur d'accès (5), la serrure (10) et un serveur de journalisation (14), ledit quatrième anneau de sécurité étant en liaison de transmission avec le troisième anneau de sécurité lors du contrôle d'accès.
